Europäisches Patentamt

European Patent Office

Office européen des brevets

(19)

(11) **EP 0 967 503 A1**

(12) ## DEMANDE DE BREVET EUROPEEN

(43) Date de publication:
29.12.1999 Bulletin 1999/52

(51) Int. Cl.⁶: $G02B\ 6/42$

(21) Numéro de dépôt: 99117639.7

(22) Date de dépôt: 22.09.1994

(84) Etats contractants désignés:
DE FR GB

(30) Priorité: 24.09.1993 FR 9311404

(62) Numéro(s) de document de la (des) demande(s) initiale(s) en application de l'article 76 CBE:
94402108.8 / 0 645 654

(71) Demandeur: FRANCE TELECOM
75015 Paris (FR)

(72) Inventeurs:
• Ghirardi, Frédéric
75011 Paris (FR)

• Giraudet, Louis
92600 Asnieres (FR)

(74) Mandataire: Texier, Christian
Cabinet Regimbeau,
26, Avenue Kléber
75116 Paris (FR)

Remarques:
Cette demande a été déposée le 08 - 09 - 1999 comme demande divisionnaire de la demande mentionnée sous le code INID 62.

(54) **Procédé de réalisation d'une structure integrée monolithique incorporant des composants opto-électroniques et structures ainsi réalisée**

(57) L'invention concerne un procédé pour réaliser une structure intégrée monolithique comprenant deux composants opto-électroniques (K, D1) reliés optiquement par un guide optique.

Il comprend l'étape consistant à réaliser in situ entre les deux composants opto-électroniques au moins une barrière électriquement isolante (40) apte à permettre une transmission de lumière entre ces derniers, par l'un des moyens suivants : dopage localisé par un élément de conductivité d'un type donné, d'une région de la structure de conductivité de type opposé, dépôt par épitaxie d'une couche de matériau semi-isolant.

FIG 1

EP 0 967 503 A1

## Description

La présente invention concerne le domaine de l'opto-électronique, et plus particulièrement celui des structures intégrées monolithiques faisant appel à une technologie commune de réalisation de composants et non à un assemblage de composants réalisés séparément. L'invention s'applique notamment mais non exclusivement à la réalisation d'un circuit de réception hétérodyne.

La publication "Integrated balanced mixer receiver on InP, Trommer et al., 4th InP and Related Compounds Conference, WE3, Newport 1992" décrit un circuit de réception hétérodyne intégré monolithique comprenant deux photodiodes de détection reliées électriquement en série et un coupleur 3dB comportant deux guides optiques. Le coupleur reçoit respectivement en entrée dans les guides optiques un signal utile à démoduler S et un signal de référence R généré par un oscillateur local et délivre en sortie sur les deux photodiodes de détection deux signaux correspondant respectivement à la demi-somme et à la demi-différence des signaux S et R. Les photodiodes délivrent des signaux électriques représentatifs du carré du module de cette demi-somme et de cette demi-différence, de la forme $S^2 + 2S.R + R^2$ et $S^2 - 2S.R + R^2$ respectivement. Le montage en série des deux photodiodes permet de recueillir au point commun la différence de ces deux expressions, c'est-à-dire un signal électrique de la forme 4S.R. On comprendra aisément que l'intérêt d'un tel récepteur réside dans l'élimination du bruit $R^2$ de l'oscillateur local ainsi que dans l'amplification du signal utile S, l'amplitude du signal R étant très grande devant celle du signal S. Toutefois, il est difficile de réaliser dans la pratique un coupleur complètement équilibré, c'est-à-dire apte à délivrer exactement la demi-somme et la demi-différence des signaux d'entrée S et R, de sorte qu'il est nécessaire de réaliser un grand nombre de structures intégrées et d'effectuer un tri pour éliminer celles dont le coupleur n'est pas bien équilibré. Dans la structure décrite, les deux guides optiques sont réalisés sur un substrat semi-isolant avec des matériaux semi-isolants de sorte que l'on ne rencontre pas de problèmes d'isolation électrique des deux photodiodes.

A titre d'exemple d'une autre structure monolithique intégrée connue, on citera la publication "Directional Coupler, Balanced PIN Pair and JFET intregrated on InP Towards Receiver OEICs, L. Giraudet et al., Proceeding of fourth optoelectronic conference, PDP, 14 July 1992". Dans cette structure les deux guides optiques du coupleur sont réalisés dans des matériaux conducteurs et l'on observe un courant de fuite circulant par les guides optiques entre les électrodes des deux photodiodes montées en série, qui altère les performances de la structure. Le fait de réaliser les deux guides optiques du coupleur dans des matériaux conducteurs présente néanmoins l'avantage de permettre un équilibrage électrique de ce dernier au moyen de l'application d'une tension électrique ou d'une injection de courant électrique par deux électrodes de contact réalisées sur le coupleur, associées chacune à un guide optique. Cette injection de courant ou tension appliquée entraîne une variation de l'indice du matériau constituant la couche de guidage des guides optiques et rend ainsi possible l'ajustement de la phase des signaux lumineux se propageant dans ce dernier.

On a par ailleurs proposé dans la publication "Balanced Operation of a GaInAs/GaInAsP Multiple-Quantum-Well Integrated Heterodyne Receiver, IEEE Photonics Technology Letters Vol.2, No 8., August 1990" de ne pas relier sur la structure même les deux photodiodes en série afin de s'affranchir des problèmes de courant de fuite entre les électrodes des deux photodiodes. Les signaux électriques délivrés par chacune des deux photodiodes sont amplifiés séparément puis soustraits l'un de l'autre pour éliminer les termes en $S^2$ et $R^2$ précités. L'amplification séparée des signaux électriques délivrés par chacune des photodiodes présente l'inconvénient de ne plus supprimer le bruit dû à la variation de $R^2$.

On a décrit dans le brevet US-A-5 122 852 une structure intégrée comportant deux détecteurs à semi-conducteurs disposés sur un même substrat, et associés chacun à un guide optique. Le substrat et les guides sont formés dans des matériaux isolants non semi-conducteurs qui, s'ils ne posent pas de problèmes d'isolation électrique, ne permettent pas l'intégration monolithique des détecteurs qui doivent être réalisés par une technique dite "epitaxial lift-off", complexe à mettre en oeuvre. La structure décrite, qui n'est pas une structure intégrée monolithique, est ainsi coûteuse à réaliser.

On a proposé dans la publication ELECTRONICS LETTERS, Vol. 24, N° 23, 10 Novembre 1988, STEVENAGE GB, pages 1457-1458, S. Chandrasekhar et al., "Balanced dual photodiodes integrated with a 3dB directional coupler for coherent lightwave receivers", de diminuer le courant de fuite dû à l'emploi d'un matériau conducteur pour un guide optique en réduisant la section de celui-ci et en augmentant sa longueur. La résistivité du guide reste toutefois assez faible, de l'ordre du M$\Omega$, et en tout cas tributaire de la longueur du guide, qui pose alors un problème d'encombrement et de coût de réalisation.

On a décrit dans la publication "22 GHz Photodiode monolithically integrated with optical waveguide on semi-insulating InP using novel Butt-Joint structure, Kato et al, Electronic Letters, 1992, pp 1140-1143" un moyen pour réaliser une couche isolante sur la tranche d'extrémité d'un guide optique, entre ce dernier et une photodiode. La photodiode est isolée par usinage par faisceau d'ions réactifs (RIBE en anglais), et un film de silice constituant la couche isolante est déposé sur les flancs de la photodiode au moyen d'un magnétron. Il est difficile, par cette méthode, de contrôler l'épaisseur du film de silice amorphe qui est réalisé entre la photodiode et le guide optique, pour obtenir la valeur particulière d'épaisseur de film qui assure une transmission optimale de lumière entre le guide optique et la photodiode.

On a décrit dans la publication JP-A-03 292 777 une structure intégrée dans laquelle une barrière isolante est épitaxiée après les couches constitutives d'un laser à semi-conducteur et d'un détecteur. Ces deux composants sont réalisés sur un substrat conducteur et conservent une électrode commune, en sorte que l'isolation entre les deux composants n'est pas complète. De même, on a proposé dans la publication EP-A-0 422 854 une structure dans laquelle un photodétecteur et un amplificateur optique conservent une électrode commune. Les moyens ainsi proposés selon la présente invention sont définis dans les revendications annexées.

La présente invention vise à remédier aux inconvénients précités. La barrière isolante est réalisée dans l'invention durant l'élaboration des composants de la structure sans qu'il soit nécessaire de procéder à l'usinage d'une tranchée située sur le trajet de la lumière dans la structure entre ces deux composants.

Avantageusement, la transmission de lumière entre l'un au moins des composants opto-électroniques et le guide optique s'effectue par évanescence. En variante, elle s'effectue par couplage en bout.

De préférence, ledit matériau semi-isolant est constitué par du phosphure d'indium incorporant du fer.

Avantageusement, une couche d'adaptation d'impédance optique de conductivité de type n+ est déposée entre le guide optique et celui au moins des composants opto-électroniques pour lequel la transmission de lumière s'effectue par évanescence avec le guide optique.

Le procédé selon l'invention est avantageusement utilisé pour réaliser une structure intégrée monolithique d'un circuit de réception hétérodyne comprenant deux photodiodes de détection reliées électriquement en série et un coupleur 3dB apte à être équilibré électriquement, le coupleur constituant l'un desdits composants opto-électroniques et chaque photodiode constituant l'autre desdits composants opto-électroniques.

L'invention a également pour objet une structure intégrée monolithique comportant deux composants opto-électroniques reliés optiquement par un guide optique, caractérisée en ce qu'elle comporte entre les deux composants opto-électroniques une barrière électriquement isolante apte à permettre la transmission de lumière entre ces derniers, formée in situ par le dépôt par épitaxie d'une couche de matériau semi-isolant entre le guide optique et un composant opto-électronique, sur une portion de trajet de type évanescent de la lumière.

L'invention a encore pour objet un circuit de réception hétérodyne intégré monolithique comportant deux photodiodes de détection reliées électriquement en série et un coupleur 3dB électriquement ajustable, une barrière électriquement isolante étant formée in situ entre les photodiodes de détection et le coupleur, cette barrière étant apte à permettre la transmission de lumière entre le coupleur et les photodiodes de détection.

D'autres caractéristiques et avantages de la présente invention apparaîtront à la lecture de la description détaillée qui va suivre, d'un exemple de réalisation non limitatif de l'invention et à l'examen du dessin annexé sur lequel :

- la figure 1 est une vue en perspective, schématique, d'une structure intégrée monolithique conforme à une réalisation de l'invention,
- la figure 2 est une juxtaposition de sections, dans des plans parallèles au plan XZ, de la structure représentée sur la figure 1.

Dans toute la description qui suit les termes ou ensemble de termes "longueur, avant, arrière", "latéral" et "épaisseur, vertical, supérieur, inférieur" se référeront respectivement à des distances ou positionnements selon les axes X, Y et Z d'un trièdre de référence (X, Y, Z) pour les figures.

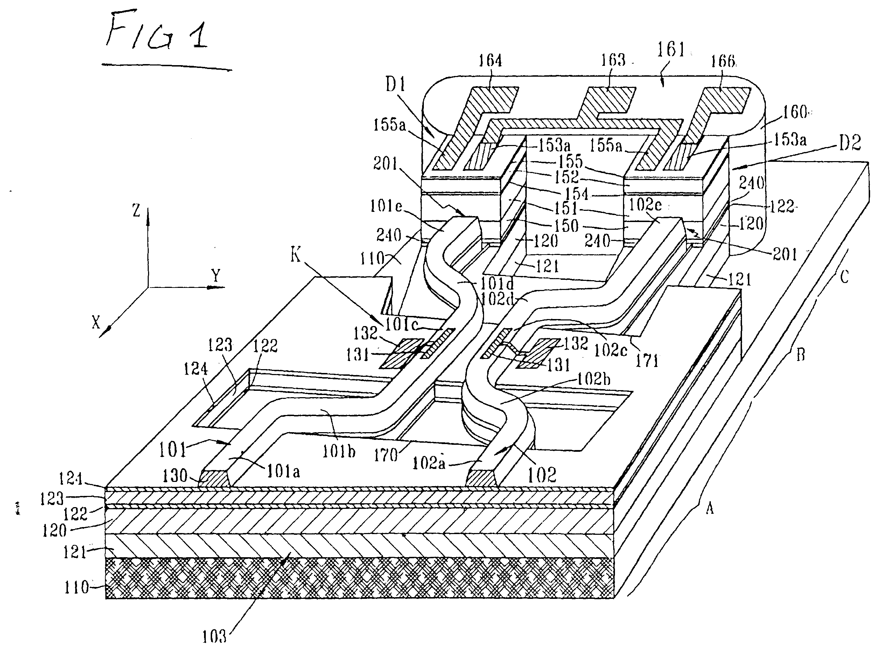

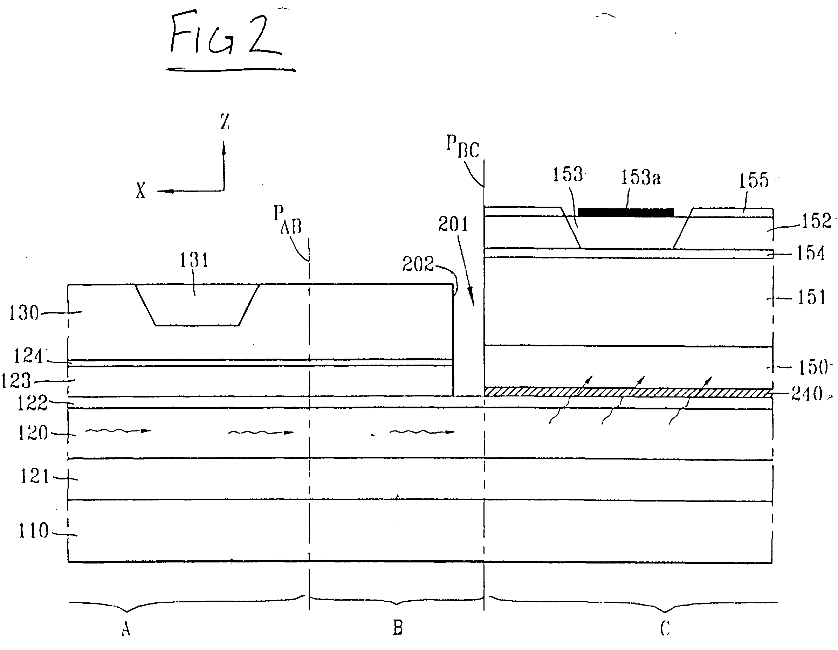

L'exemple de structure intégree monolithique représenté sur les figures 1 et 2 est réalisé conformément au procédé selon l'invention et concerne des circuits de réception hétérodyne comprenant deux photodiodes de détection D1 et D2, de type PIN, reliées électriquement en série et un coupleur 3dB électriquement ajustable, référencé K, comportant deux guides optiques présentant à leur partie supérieure des rubans de guidage références 101 et 102 pour chaque guide optique respectivement.

Ces deux structures intégrées sont généralement symétriques par rapport à un plan médian de symétrie parallèle au plan XZ.

L'introduction de la lumière dans les guides optiques s'effectue par la face frontale avant 103 de la structure, plane et perpendiculaire à l'axe X, dans une couche de guidage 120 bordée inférieurement et supérieurement par des couches de confinement inférieur 121 et supérieur 122 comme cela sera précisé dans la suite. Les rubans de guidage 101 et 102 confinent la lumière dans la région de la couche de guidage qu'ils surmontent et présentent depuis la face frontale avant 103 deux portions avant rectilignes s'étendant de façon espacée parallèlement à l'axe X, référencées 101a et 102a, prolongées vers l'arrière par deux portions infléchies avant 101b et 102b se rapprochant l'une de l'autre, puis par deux portions rectilignes rapprochées 101c et 102c, s'étendant côte-à-côte parallèlement à l'axe X et constituant la zone active du coupleur K, par deux portions infléchies arrière s'éloignant l'une de l'autre 101d et 102d, prolongées par deux portions rectilignes 101e et 102e, s'étendant de facon espacée parallèlement à l'axe X et aboutissant respectivement aux photodiodes D1 et D2.

On désignera par la suite par A, B et C trois régions de la structure délimitées entre elles par deux plans $P_{AB}$ et $P_{BC}$ perpendiculaires à l'axe X.

Les rubans de guidage 101 et 102 s'étendent sur les régions A et B et les photodiodes D1 et D2 sont réalisées dans la région C. Le plan $P_{AB}$ coupe les rubans de guidage 101 et 102 au niveau de la jonction entre les portions infléchies arrière 101d et 102d et les portions rectilignes arrière 101e et 102e.

La structure intégrée monolithique représentée sur les figures 1 et 2 comporte un substrat 110 en matériau semi-isolant, représenté après découpage sur les figures, sous une de forme parallélipipédique allongée selon l'axe X, constitué dans l'exemple de réalisation décrit par du phosphure d'indium rendu semi-isolant par incorporation de fer (InP), et dont la résistance est supérieure $10^7$ $\Omega$cm.

Sur l'ensemble du substrat semi-isolant 110 on dépose successivement dans une première épitaxie, par exemple par une méthode d'épitaxie par organométalliques en phase vapeur (MOCVD en anglais) ou par une méthode d'épitaxie par jet moléculaire (MBE en anglais) :

a) la couche de confinement inférieur 121 d'indice $n_1$, constituée d'InP, d'une épaisseur de 0,5 $\mu$m, de conductivité de type n,

b) la couche de guidage optique 120 d'indice $n_2$ supérieur à n1, constituée de quaternaire InGaAsP, de type de conductivité n ou n⁻ et d'une épaisseur de 0,65 $\mu$m,

c) la couche de confinement supérieur 122 d'indice $n_3$ inférieur à $n_2$, d'une épaisseur de l'ordre de 0,05 $\mu$m, constituée d'InP de conductivité de type n⁻,

d) une couche 150 d'adaptation d'impédance optique, constituée de matériau quaternaire GaInAsP de conductivité de type n+, d'une épaisseur de 0,4 $\mu$m,

e) une couche absorbante 151 de la photodiode PIN, constituée de matériau ternaire GaInAs de conductivité intrinsèque de type n⁻, d'une épaisseur de 0,9 $\mu$m,

f) une fine couche 154 de matériau quaternaire GaInAsP, destinée à réaliser de façon connue en soi un raccord graduel avec la couche suivante de matériau binaire, d'une épaisseur de 50 nm,

g) une couch 152 de confinement supérieur de la photodiode PIN, constituée d'InP de type de conductivité n, d'une épaisseur de 0,4 $\mu$m,

h) une fine couche 155 de contact de la photodiode, constituée de matériau ternaire GaInAs de type de conductivité n, d'une épaisseur de l'ordre de 0,05 $\mu$m, et

i) une couche de protection d'InP de l'ordre de 0,1 $\mu$m pour la reprise ultérieure de l'épitaxie et qui n'apparaît pas sur le dessin.

Ensuite, sur la partie de la structure (régions A et B) sur laquelle seront réalisés les deux guides optiques du coupleur K, on enlève la couche de protection d'InP, précitée, les couches 155, 152, 154, 151 et 150. On procède alors, sur la fine couche de confinement supérieur 122, mise à nu, à une deuxième épitaxie au cours de laquelle on dépose successivement sur les régions A et B de la structure :

j) une couche 123 de confinement supérieur, constituée d'InP, de 0,15 $\mu$m d'épaisseur, de même composition que la couche 122,

k) une fine couche 124 d'arrêt, constituée de matériau quaternaire GaInAsP, de conductivité de type n, d'épaisseur 25 nm,

l) une couche 130 de confinement supérieur constituée d'InP, de conductivité de type n, d'épaisseur 0,8 $\mu$m et sur laquelle seront gravés les rubans de guidage 101 et 102.

On dépose alors sur l'ensemble de la structure un masque de protection en nitrure de silicium, puis on effectue une gravure sèche de ce masque correspondant au tracé des rubans de guidage 101 et 102, qui sont ensuite réalisés par enlèvement de la couche de confinement supérieur 130 sur les parties non protégées.

Après gravure des rubans des guidages 101 et 102, on dispose un deuxième masque de protection, en résine, sur l'ensemble de la structure, ce masque présentant deux fenêtres 170 et 171 englobant les portions infléchies 101b, 102b et 101d, 102d des rubans de guidage 101 et 102. On enlève a l'intérieur de ces fenêtres par attaque chimique les couches d'arrêt 124 et de confinement supérieur 122 et 123 pour mettre à nu dans ces fenêtres la face supérieure de la couche de guidage 20 comme représenté sur la figure 1.

On déposé ensuite sur l'ensemble de la structure, un masque en nitrure de silicium à quatre fenêtres dont deux se situent respectivement sur les portions rectilignes rapprochees 101c, 102c des rubans de guidage 101 et 102 et les deux autres sur les couches de contact 155 des photodiodes D1 et D2. On diffuse au travers de ces fenêtres du zinc dans les couches 155 et 152 des photodiodes pour la réalisation de deux zones 153 de type de conductivité p+ et on diffuse dans la couche 130 sur la moitié de l'épaisseur des rubans de guidage 101 et 102 du zinc pour la réalisation de deux zones 131 de conductivité de type p+ d'électrodes d'équilibrage du coupleur K.

On notera qu'il est avantageux que les couches 130 et 152 soient, comme cela vient d'être décrit, réalisées dans le même matériau de façon à permettre le dopage simultané par diffusion de Zn dans ces couches.

On dépose ensuite sur la couche d'arrêt 124, latéralement de part et d'autre des deux portions rectilignes rapprochées 101c et 102c des rubans de guidage 101 et 102, deux contacts électriques 132 respectifs du coupleur K, reliés électriquement chacun à la zone diffusée 131 adjacente.

On dépose également par métallisation sur chaque photodiode D1 et D2 des contacts n et p référencés respectivement 155a et 153a, reliés électriquement respectivement, pour chaque photodiode, à une partie de la surface de la couche de contact 155 située hors de la zone diffusée 153 et à cette dernière.

Avantageusement, la couche 150 d'adaptation d'impédance optique en matériau quaternaire présente un indice n4 supérieur à l'indice n3 de la couche de confinement supérieur 122. L'épaisseur de la couche 150 est de préférence choisie pour qu'elle constitue une couche antireflet et sa situation au-dessus du guide optique permet de limiter le temps de transit des porteurs. La couche 150 présente avantageusement un indice optique supérieur à celui de la couche de guidage de façon à réduire la longueur d'absorption nécessaire à la transmission de la lumière par évanescence sortant du guide optique vers la photodiode, et donc de limiter la capacité de la photodiode.

On détoure ensuite sur les régions B et C de la stucture, jusqu'au substrat 110, les deux photodiodes D1 et D2 par gravure par faisceau ionique (IBE en anglais) au travers d'un masque de résine, pour aboutir à la configuration représentée sur la figure 1. La région de détourage s'étend depuis le plan $P_{AB}$ de la structure vers l'arrière jusqu'à la face frontale arrière de la structure. Les guides optiques sont détourés sur leur partie surmontée par les portions rectilignes arrière 101e et 102e des rubans de guidage 101 et 102.

On réalise ensuite de façon connue en soi un plot de support 160 de contacts électriques, en polyimide, dont la face supérieure porte la référence 161 et l'on dépose par métallisation sur ce plot de support 160 des contacts 166, 163 et 164 reliés respectivement au contact n 155a de la photodiode D1, au contact p 153a de la photodiode D1 et au contact p 153a de la photodiode D2. Le contact 163 est également relié au contact n 155a de la photodiode D2 de sorte que les deux photodiodes D1 et D2 sont ainsi reliées électriquement en série par l'intermédiaire du contact 163 du plot de support 160.

Dans l'invention, la barrière électriquement isolante est réalisée par le dépôt par épitaxie d'une couche 240 de matériau semi-isolant sur la couche de confinement supérieur 122 du guide optique lors de la première étape d'épitaxie pendant laquelle les couches 150, 151, 154, 152 et 155 sont également déposées. En variante, on peut proposer de déposer la couche 240 directement sur la couche de guidage 120.

La couche 240 est avantageusement constituée d'InP rendu semi-isolant par incorporation de fer (InP:Fe).

La couche 240 est ensuite enlevée par attaque chimique sur les régions A et B de la structure avant la deuxième étape d'épitaxie au cours de laquelle les couches 123, 124 et 130 seront déposées.

Lors de la gravure des rubans de guidage 101 et 102, on veillera à graver également des tranchées 201 séparant la face d'extrémité arrière 202 de ces derniers du plan $P_{BC}$ contenant le bord avant de l'empilement des couches constituant les photodiodes D1 et D2, pour éviter tout contact électrique court-circuitant la couche 240. Les tranchées 201 ont de préférence une largeur, mesurée selon l'axe X, de l'ordre de 3 µm et s'étendent verticalement jusqu'à la couche 122. A la différence de la dernière publication citée dans le préambule de la demande, il n'est pas important ici de réaliser avec une grande précision ces tranchées 201 car celles-ci ont simplement un rôle d'isolation et ne sont pas traversées par la lumière.

L'invention n'est pas limitée aux deux réalisations qui viennent d'être décrites. On peut notamment proposer d'intégrer sur la structure un oscillateur local relié optiquement à l'un des guides du coupleur.

## Revendications

1.    Procédé pour réaliser une structure intégrée monolithique comportant sur un substrat en matériau semi-isolant, deux composants opto-électroniques reliés optiquement par un guide optique comprenant un matériau électriquement conducteur ou semi-conducteur, comprenant l'étape consistant à réaliser entre les deux composants opto-électroniques, et sur le chemin de la lumière transmise entre ces deux composants, au moins une barrière électriquement isolante c'est-à-dire une barrière interdisant le passage d'un courant électrique entre les deux composants opto-électroniques, tout en étant apte à permettre une transmission de lumière entre ces derniers, caractérisé en ce que ladite barrière (40 ; 240) est réalisée in situ durant l'élaboration des composants de la structure, sans procéder à une gravure de matériau sur le trajet de la lumière dans la structure entre ces deux composants, par dépôt par épitaxie d'une couche de matériau semi-isolant sur une portion de trajet de type évanescent de la lumière.

2.    Procédé selon la revendication 1, caractérisé en ce que ledit matériau semi-isolant est constitué par du phosphure d'indium incorporant du fer.

3.    Procédé selon l'une des revendications 1 ou 2, caractérisé en ce qu'une couche d'adaptation d'impédance optique de conductivité de type n+ est déposée entre le guide optique et celui au moins des composants opto-électroniques pour lequel la transmission de lumière s'effectue par évanescence avec le guide optique.

4.    Procédé selon l'une des revendications 1 à 3, caractérisé en ce que ladite structure intégrée monolithique est un circuit de réception hétérodyne comprenant deux photodiodes de détection (D1, D2) reliées électriquement en série et un coupleur 3dB (K) apte à être équilibré électriquement, le coupleur (K) constituant l'un desdits composants optoélectroniques et chaque photodiode (D1 ; D2) constituant l'autre desdits composants opto-électroniques.

5. Structure intégrée monolithique comportant sur un substrat en matériau semi-isolant, deux composants opto-électroniques reliés optiquement par un guide optique comprenant un matériau électriquement conducteur ou semi-conducteur, caractérisée en ce qu'elle comporte entre les deux composants opto-électroniques, et sur le chemin de la lumière transmise entre ces deux composants, une barrière électriquement isolante (40) c'est-à-dire une barrière interdisant le passage d'un courant électrique entre les deux composants opto-électroniques, tout en étant apte à permettre la transmission de lumière entre ces derniers, formée in situ durant l'élaboration des composants de la structure, sans procéder à une gravure de matériau sur le trajet de la lumière dans la structure entre ces deux composants, par le dépôt par épitaxie d'une couche de matériau semi-isolant entre le guide optique et ce composant opto-électronique, sur une portion de trajet de type évanescent de la lumière.

6. Application d'une structure conforme à la revendication 5, à la réalisation d'un circuit de réception hétérodyne intégré monolithique comportant deux photodiodes de détection reliées électriquement en série, formant chacune un premier composant optoelectronique, et un coupleur 3dB électriquement ajustable, formant un second composant opto-électronique, une barrière électriquement isolante (40 ; 240) étant formée in situ entre chaque photodiode de détection et le coupleur, cette barrière étant apte à permettre la transmission de lumière entre le coupleur et chaque photodiode de détection.

FIG 1

FIG 2

EP 0 967 503 A1

**Office européen
des brevets**

# RAPPORT DE RECHERCHE EUROPEENNE

Numéro de la demande

EP 99 11 7639

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| X,D | EP 0 422 854 A (AT&T) 17 avril 1991 (1991-04-17) | 1,2,5 | G02B6/42 |
| A | * colonne 4, ligne 19 - ligne 23 * * figure 3 * | 6 | |
| A,D | TROMMER D ET AL: "INTEGRATED BALANCED MIXER RECEIVER ON INP" PROCEEDINGS OF THE INTERNATIONAL CONFERENCE ON INDIUM PHOSPHIDE AND RELATED MATERIALS, NEWPORT, APR. 21 - 24, 1992, no. CONF. 4, 21 avril 1992 (1992-04-21), pages 250-253, XP000341269 INSTITUTE OF ELECTRICAL AND ELECTRONICS ENGINEERS ISBN: 0-7803-0522-1 * tout le document * | 6 | |
| A,D | US 5 122 852 A (CHAN ET AL.) 16 juin 1992 (1992-06-16) * colonne 5, ligne 36 - ligne 63 * * figure 8 * | 1 | |
| A,D | CHANDRASEKHAR S ET AL: "BALANCED DUAL PHOTODIODES INTEGRATED WITH A 3 DB DIRECTIONAL COUPLER FOR COHERENT LIGHTWAVE RECEIVERS" ELECTRONICS LETTERS, vol. 24, no. 23, 10 novembre 1988 (1988-11-10), page 1457/1458 XP000111225 ISSN: 0013-5194 * tout le document * | 1 | **DOMAINES TECHNIQUES RECHERCHES (Int.Cl.6)** G02B |
| A,D | PATENT ABSTRACTS OF JAPAN vol. 016, no. 130 (E-1184), 2 avril 1992 (1992-04-02) & JP 03 292777 A (NEC CORP), 24 décembre 1991 (1991-12-24) * abrégé * | 1 | |

-/--

Le présent rapport a été établi pour toutes les revendications

| Lieu de la recherche | Date d'achèvement de la recherche | Examinateur |
|---|---|---|
| BERLIN | 27 octobre 1999 | Luck, W |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P04C02)

9

**Office européen des brevets**

**RAPPORT DE RECHERCHE EUROPEENNE**

Numéro de la demande

EP 99 11 7639

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | DE 41 15 078 A (SIEMENS) 12 novembre 1992 (1992-11-12) * colonne 4, ligne 56 - colonne 5, ligne 5 * * figure 1 * | 1 | |
| A | PATENT ABSTRACTS OF JAPAN vol. 015, no. 014 (E-1022), 11 janvier 1991 (1991-01-11) & JP 02 264492 A (MITSUBISHI ELECTRIC CORP), 29 octobre 1990 (1990-10-29) * abrégé * | 1 | |
| A | PATENT ABSTRACTS OF JAPAN vol. 011, no. 288 (E-542), 17 septembre 1987 (1987-09-17) & JP 62 089388 A (MATSUSHITA ELECTRIC IND CO LTD), 23 avril 1987 (1987-04-23) * abrégé * | 1 | |

**DOMAINES TECHNIQUES RECHERCHES (Int.Cl.6)**

Le présent rapport a été établi pour toutes les revendications

| Lieu de la recherche | Date d'achèvement de la recherche | Examinateur |
|---|---|---|
| BERLIN | 27 octobre 1999 | Luck, W |

**ANNEXE AU RAPPORT DE RECHERCHE EUROPEENNE
RELATIF A LA DEMANDE DE BREVET EUROPEEN NO.**　　EP 99 11 7639

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

27-10-1999

| Document brevet cité au rapport de recherche | Date de publication | Membre(s) de la famille de brevet(s) | Date de publication |
|---|---|---|---|
| EP 0422854 A | 17-04-1991 | US 5029297 A<br>DE 69021484 D<br>DE 69021484 T<br>JP 3198032 A | 02-07-1991<br>14-09-1995<br>01-02-1996<br>29-08-1991 |
| US 5122852 A | 16-06-1992 | AUCUN | |
| JP 03292777 A | 24-12-1991 | AUCUN | |
| DE 4115078 A | 12-11-1992 | AUCUN | |
| JP 02264492 A | 29-10-1990 | AUCUN | |
| JP 62089388 A | 23-04-1987 | AUCUN | |

EPO FORM P0460

Pour tout renseignement concernant cette annexe : voir Journal Officiel de l'Office européen des brevets, No.12/82